## Europäisches Patentamt
## European Patent Office
## Office européen des brevets

(11) Publication number: **0 115 935**
**B1**

(12) **EUROPEAN PATENT SPECIFICATION**

(45) Date of publication of patent specification: **05.04.89**

(51) Int. Cl.⁴: **B 65 G 47/18**, B 65 G 3/02, B 65 G 47/19

(21) Application number: **84300402.9**

(22) Date of filing: **24.01.84**

(54) A feed arrangement for particulate material.

(30) Priority: **31.01.83 GB 8302625**
**19.12.83 GB 8333770**

(43) Date of publication of application:
**15.08.84 Bulletin 84/33**

(45) Publication of the grant of the patent:
**05.04.89 Bulletin 89/14**

(84) Designated Contracting States:
**AT BE DE FR IT**

(56) References cited:
**DE-A-1 781 411**
**DE-A-2 915 014**
**US-A-3 035 809**

(73) Proprietor: **ELEVATOR FREE-BLOC COMPANY LIMITED**
**"Penlon" 1, Cledwyn Gardens**
**Aberdare Mid-Glamorgan, CF44 8HP (GB)**

(72) Inventor: **Saunders, Philip Trevor**
**"Penlon" 1, Cledwyn Gardens**
**Aberdare Mid-Glamorgan, CF44 8HP (GB)**

(74) Representative: **Newstead, Michael John et al**
**Haseltine Lake & Co. 28 Southampton Buildings Chancery Lane**
**London, WC2A 1AT (GB)**

Courier Press, Leamington Spa, England.

## Description

The present invention relates to a feed arrangement for particulate material, and preferably to a feed arrangement within a fixed structure.

DE-B-1 781 411 and GB-A-1 130 257 disclose a portable hopper for bulk materials. When this known hopper is used to transfer material to an appropriate smaller container, the combination of the hopper and the container has: means for containing a pile of such material; means at the bottom of the containing means defining a space and having an opening communicating from above with the space; conveying means communicating with the space for conveying out of the space such material which has passed from such a pile into the space via the opening; and a horizontal plate movable horizontally with respect to the opening, on first and second bearing arrangements on opposite sides of the plate and opening, for allowing and preventing such material to pass through the opening into the space to form a heap in said space.

According to the present invention, there is provided a feed arrangement for particulate material, comprising: means for containing a pile of such material; means at the bottom of the containing means defining a space and having an opening communicating from above with the space; conveying means communicating with the space for conveying out of the space such material which has passed from such a pile into the space via the opening; and a horizontal plate movable horizontally with respect to the opening, on first and second bearing arrangements on opposite sides of the plate and opening, for allowing and preventing such material to pass through the opening into the space to form a heap in said space, with the width of the space transverse to the direction of movement of the plate being substantially larger than the opening to extend on each side sufficiently to permit the side surfaces of said heap to be at the natural angle of repose of the particulate material and such that said side surfaces of the heap do not come into contact with the bearing arrangements.

The present invention will now be described, by way of example, with reference to the accompanying drawings, in which:-

Figure 1 is a plan view of a coal feed arrangement;

Figure 2 is a section through A-A in Figure 1;

Figure 3 is an end view of the arrangement with a cover plate removed;

Figures 4a), 4b), and 4c) are side, end and plan views of an end cover of the arrangement;

Figures 5a), 5b) and 5c) are side, plan and end views of a front cover and casing of the arrangement;

Figures 6a), and 6b) are front and side views of the cover plate;

Figures 7a) and 7b) are side and plan views of a cut-off plate and means for moving it; and

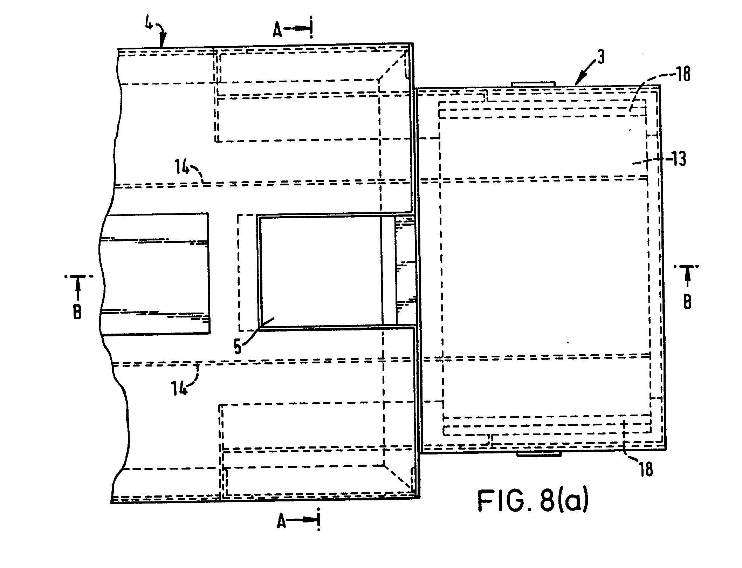

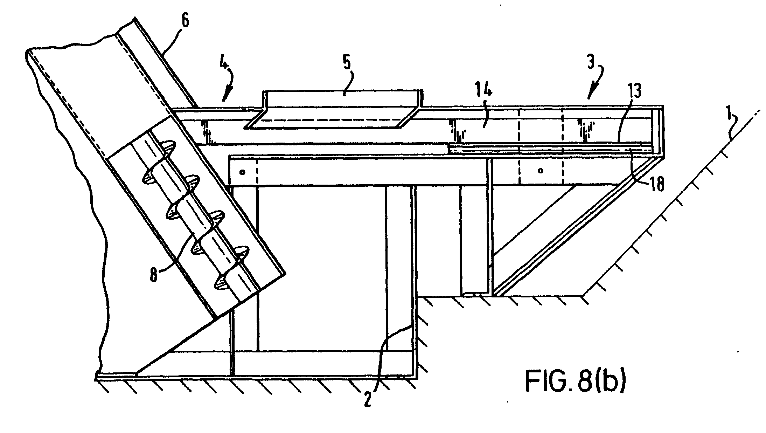

Figure 8a) is a plan view of part of an alternative form of the arrangement, Figure 8b) being a section through B-B in Figure 8a) and Figure 8c) being a section through A-A in Figure 8a); and

Figure 9a) shows an alternative arrangement for moving the cut-off plate, Figures 9b) and 9c) being enlarged details of Figure 9a), looking in the directions of arrows C and D respectively in Figure 9a).

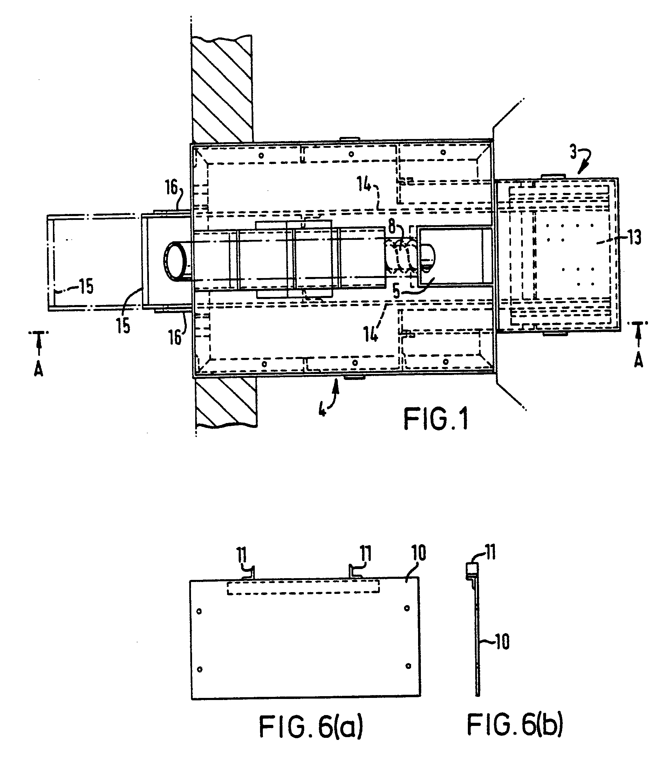

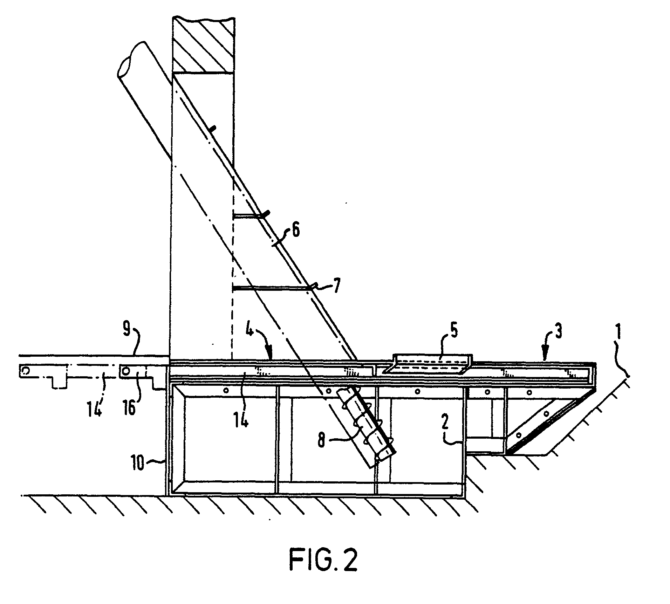

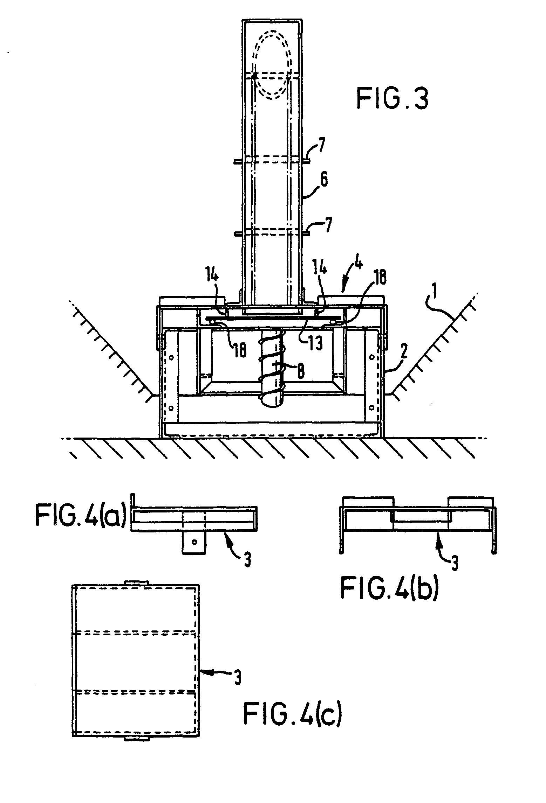

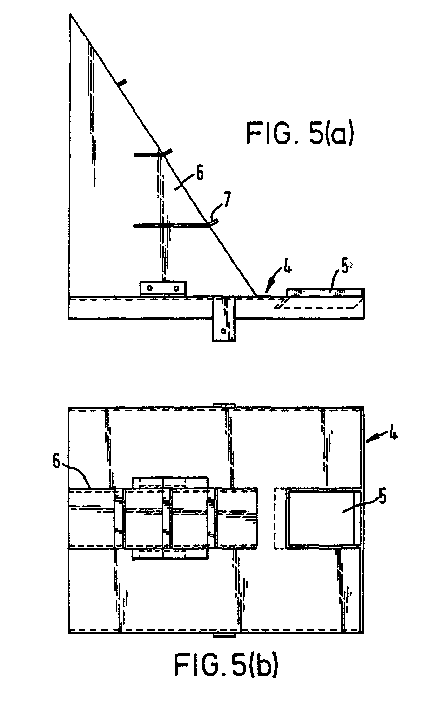

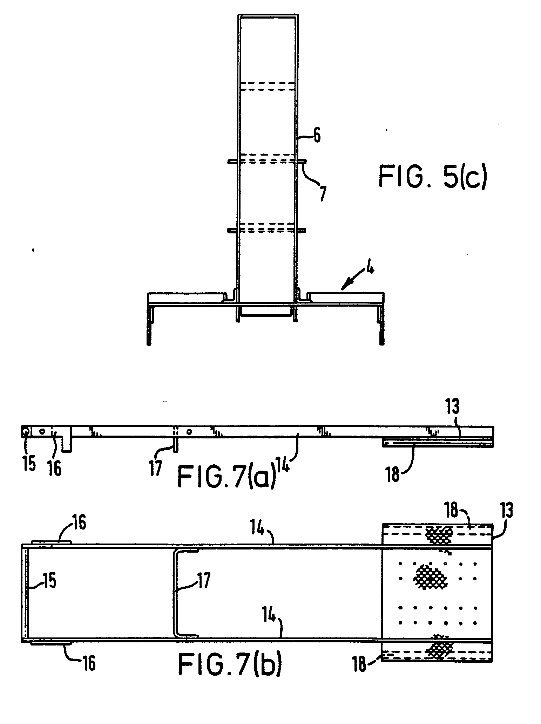

Referring first to Figures 1, 2 and 3, reference numeral 1 denotes the side of a bunker for storing a pile of coal suitable for use in a coal fired installation, for example coal up to 30 mm particle size, the bunker being alongside a boiler house (not shown). At the bottom of the bunker, there is a support box 2 constructed from bolted together steel angle pieces and steel plates, the box 2 being bolted to the floor of the bunker. Above the support box 2, there are an end cover in the form of a structure 3 and a front cover in the form of a structure 4, each made from welded together steel plates and steel webs, the structure 4 providing a rectangular opening 5 which is 250 mm by 160 mm. The structure 3 is shown in more detail in Figures 4a), 4b) and 4c) and the structure 4 in Figures 5a), 5b), and 5c). Extending upwards from the structure 4 there is a steel casing 6 having webs 7, within the casing 6 there being an elevator screw 8 which communicates with the inside of the support box 2 for conveying coal therein upwards to discharge it into an intake chute of the boiler house, reference numeral 9 denoting the floor level of the boiler house. At the left-hand end in the Figures, the support box 2 has a front plate 10 made of steel and carrying two steel angle pieces 11 welded to it.

Slidable relative to the structures 3 and 4 there is a steel plate 13 which is 6 mm thick and has 3 mm diameter holes through it at 50 mm centres. The plate 13 is carried by a pair of elongate steel flats 14 welded to it, which flats terminate at a detachable handle 15, there being a pair of steel stop plates 16 welded to the outsides of the bars 14 and a further steel stop plate 17 bolted to the insides of the bars 14. Underneath it, the plates 13 carries a pair of 12 mm diameter circular section steel bars 18 welded to it. (See Figures 7a) and 7b).

By means of the handle 15, the plate 13 may be manually moved horizontally relative to the opening 5 to allow or prevent the flow of coal into the support box 2 and on to the flights of the elevator 8 for being conveyed to the boiler house. In one extreme position of the plate 13, the plate is received in the structure 3 and the opening 5 is not covered by it and, in the other extreme position of the plate 13, the plate covers the opening 5. The two bars 18 are in contact along their lengths with the angle pieces fitted within each side of the support box 2. When the plate 13 is pulled along the angle pieces, there is little frictional effect.

The assembly is so arranged that, with the coal being deposited on to the flights, a heap of coal is formed in the support box 2 with the sides of the heap being at the natural angle of respose of a heap of such material. The sides of the heap do not come into contact with the bars 18 nor with the angle piece surfaces on which they move, the bars 18 and the angle piece surfaces being outside the heap, and the lower end of the conveyor being within the heap. The effectiveness of the operation depends on the compaction and moisture content effects on the weight distribution of the coal; the maintaining of the angle of respose of the coal within the support box 2; and the minimising of frictional effects in the movement of the plate 13. The effects of moisture in the coal, as related to the weight being supported, are more relevant to smaller sized coal, from grain to bean size category. Experience has shown that, no matter how efficient the coal preparation, the coal as delivered into a bunker contains a proportion of wet fines which, though varying in extent, is, however, always present and produces a slurry condition depending on the moisture content. When the plate 13 is passed through coal in such a condition, the effect is similar to that of penetrating a comparable granular mass in a moist condition, where an insertion could be made without the granular mass collapsing into the hole or gap thus formed. To ease the passing of the plate 13 through the coal, its leading and trailing edges are formed as knife edges.

Because the angle of repose of the coal is maintained within the support box 2, then the amount discharged into it is limited in quantity and shape. Thus the plate 13 moves through a far lesser mass than would otherwise be the case.

When the coal is delivered in a wet condition, the plate 13 may be moved to its cut-off position before the support box 2 is fed with coal and the perforations of the plate 13 thus considerably assist the natural draining-off process. The coal enters the intake flights so as to be conveyed into the boiler itself in a considerably drier condition than would otherwise be the case.

Blockages invariably occur at the intake end of the elevator 8 and all that is required, with the present assembly, is to move the plate 13 into position beneath the opening 5 to cut off the coal supply and then to remove the cover plate 10 from the front of the box 2 and finally to remove the coal from within the box so as to gain access to the flights of the elevator. A reversing switch may be fitted to the elevator motor to assist in expediting blockage freeing by reversing the flight rotation.

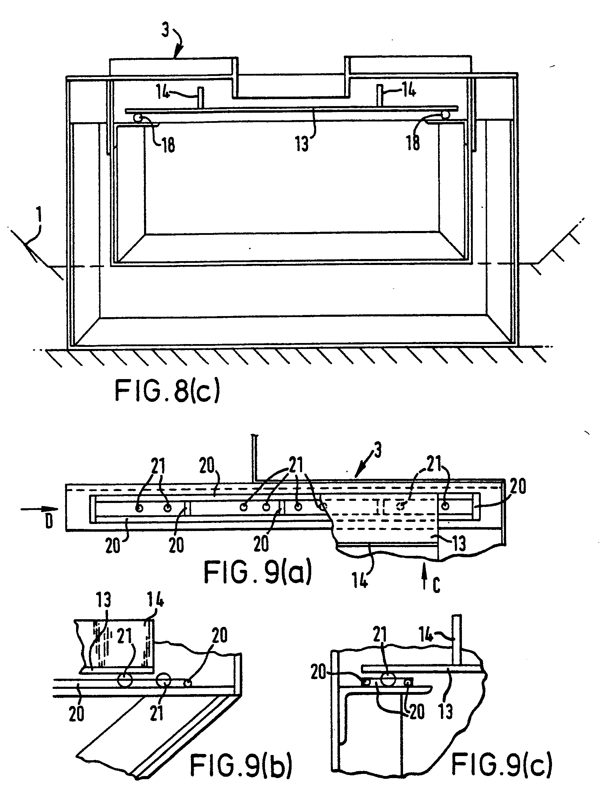

An alternative to the 12 mm bars 18 attached to the plate 13 comprises 8 mm diameter bars welded to the upper sides of the angle pieces at the top of the support box 2 and enclosing lubricated ball-bearings constrained to move along the angle pieces. This alternative is shown by way of Figures 9a), 9b) and 9c) in which reference numeral 20 denotes the bars and reference numeral 21 denotes the lubricated ball-bearings.

An important aspect of the above-described arrangement is that the removal of the elevator 8 from within the support box 2 and its steel casing 6 may be effected without removal of coal from the bunker.

Once the fuel supply to the elevator is cut off and the support box emptied, the dismantling of the stop plate 17 and handle 15 will enable the elevator to be moved forward to clear the bunker.

Possible modifications of the above examples are as follows. The elevator screw could be located at other than right angles to the support box 2 and structures 3 and 4 when viewed in plan; the coal could be conveyed to the boiler by an underfeed conveyor instead of by elevation; and the support box 2 could extend horizontally further beyond the elevator screw to enable manual access to the elevator screw intake flights.

## Claims

1. A feed arrangement for particulate material, comprising: means (1) for containing a pile of such material; means (2) at the bottom of the containing means defining a space and having an opening (5) communicating from above with the space; conveying means (8) communicating with the space for conveying out of the space such material which has passed from such a pile into the space via the opening; and a horizontal plate (13) movable horizontally with respect to the opening, on first and second bearing arrangements (18, 21) on opposite sides of the plate and opening, for allowing and preventing such material to pass through the opening into the space to form a heap in said space, characterised in that the width of the space transverse to the direction of movement of the plate is substantially larger than the opening to extend on each side sufficiently to permit the side surfaces of said heap to be at the natural angle of repose of the particulate material and such that said side surfaces of the heap do not come into contact with the bearing arrangements.

2. An arrangement according to claim 1, wherein each of said bearing arrangements comprises a circular section rod (18) fixed to the said plate (13).

3. An arrangement according to claim 1 or 2, wherein the said plate (13) is perforated.

4. An arrangement according to any preceding claim, wherein the said conveying means comprises a screw conveyor (8).

5. An arrangement according to any preceding claim, wherein the said plate (13) is carried by a pair of elongate members (14) joined outside the space defining means by a handle (15), for moving the said plate (13) horizontally.

6. An arrangement according to claim 5, wherein the said handle (15) is detachable from the said members (14) and the said conveying means (8) is thereafter movable away from the said space defining means (2).

7. An arrangement according to claim 5 or 6, wherein there is a stop member (17) joining the said elongate members (14) and between the said handle (15) and the plate (13), for limiting the travel of the plate.

8. An arrangement according to claims 6 or 7, wherein the said stop member (17) is detachable to enable movement of the conveying means (8) away from the said space defining means (2).

9. An arrangement according to claim 6 or 8, wherein the said space defining means (2) is provided with a plate (10) which is removable to enable movement of the conveying means (8) away from the space defining means.

10. An arrangement according to claim 2, wherein the said circular section rods (18) run on respective flat surfaces of the said space defining means (2).

11. An arrangement according to any preceding claim, wherein the said space defining means comprises joined together plates and angle pieces.

12. An arrangement according to claim 1, wherein said bearing means comprises ball-bearings (21).

13. An arrangement according to claims 10 and 11, wherein the said flat surfaces are provided by such angle pieces.

**Patentansprüche**

1. Eine Fütteranlage für lose, körnige Materialien, die aus folgenden Teilen besteht: einer Vorrichtung (1), um einen Haufen dieses Materials zu speichern; einer Vorrichtung (2) an der Unterseite dieses Speicherteils, die aus einem Hohlraum besteht und einer Öffnung (5), die den oberen Teil mit diesem Hohlraum verbindet; einer Transportvorrichtung (8), die es ermöglicht, aus dem Hohlraum jenes Material hinauszutransportieren, das von dem Haufen durch die Öffnung in den Hohlraum gelangt ist; sowie einer horizontalen Platte (13), die sich horizontal zur Öffnung bewegt auf den beiden Lagern (18, 21) an den einander gegenüberliegenden Seiten der Platte und der Öffnung, um zu ermöglichen bzw. zu verhindern, daß das Material durch die Öffnung in den Hohlraum gelangt und dort einen Haufen bildet, wobei die Breite des Hohlraums quer zur Laufrichtung der Platte wesentlich größer ist als die Öffnung, um auf jeder Seite genügend Platz zu bieten, daß die Seitenflächen des Haufens den natürlichen Ruhewinkel des körnigen Materials erreichen, und damit diese Seitenflächen des Haufens nicht in Berührung mit den Lagern kommen.

2. Entsprechend Punkt 1 enthält jedes der erwähnten Lager eine runde Stange (18), die an der erwähnten Platte befestigt ist (13).

3. Entsprechend Punkt 1 oder 2 die erwähnte Platte (13) perforiert.

4. Entsprechend allen vorangehenden Punkten besteht die erwähnte Transportvorrichtung aus einem Schrauben (screw)-Transportmechanismus (8).

5. Entsprechend allen vorangehenden Punkten wird die erwähnte Platte (13) von einem Paar verlängerter Glieder (14) getragen, die außerhalb des Hohlraums mit einem Griff verbunden sind (15), der es ermöglicht, die Platte (13) horizontal zu bewegen.

6. Entsprechend Punkt 5 ist der erwähnte Griff (15) von den Gliedern (14) abnehmbar, und die Transportvorrichtung (8) läßt sich danach aus dem Hohlraum entfernen (2).

7. Entsprechend Punkt 5 oder 6 gibt es eine Stopvorrichtung (17), die zwischen dem Griff (15) und der Platte (13) mit den verlängerten Gliedern (14) verbunden ist, um die Bewegung der Platte (13) einzuschränken.

8. Entsprechend Punkt 6 oder 7 ist die erwähnte Stopvorrichtung (17) abnehmbar, um die Entfernung der Transportvorrichtung (8) aus dem Hohlraum (2) zu ermöglichen.

9. Entsprechend Punkt 6 oder 8 ist der erwähnte Hohlraum (2) mit einer Platte versehen (10), die abnehmbar ist, um die Entfernung der Transportvorrichtung (8) aus dem Hohlraum zu ermöglichen.

10. Entsprechend Punkt 2 laufen die erwähnten runden Stangen (18) auf die jeweils ebenen Flächen des Hohlraums zu (2).

11. Entsprechend allen vorangehenden Punkten enthält der erwähnte Hohlraum miteinander verbundene Platten und Winkelstücke.

12. Entsprechend Punkt 1 besteht das erwähnte Lager aus Kugellagern (21).

13. Entsprechend Punkt 10 und 11 sind die erwähnten ebenen Flächen mit Winkelstücken versehen.

**Revendications**

1. Un dispositif d'alimentation pour produits pulvérulents, comprenant: des moyens (1) permettant de contenir un amoncellement de ces produits; des moyens (2) en bas des moyens conteneurs, définissant un espace et présentant une ouverture (5) communiquant par en haut avec l'espace; des moyens de transport (8) communiquant avec l'espace pour transporter hors de l'espace les produits qui sont passés d'un tel amoncellement dans l'espace par l'intermédiaire de l'ouverture; et une plaque horizontale (13) mobile horizontalement par rapport à l'ouverture, sur de premier et second dispositifs à paliers (18, 21) sur les côtés opposés de la plaque et de l'ouverture, afin de permettre et d'empêcher à de tels produits de passer à travers l'ouverture dans l'espace pour former un tas dans ledit espace, caractérisé en ce que la largeur de l'espace transversalement à la direction de mouvement de la plaque est sensiblement plus grande que l'ouverture afin de s'étendre de chaque côté de manière suffisante pour permettre aux surfaces latérales dudit tas de se trouver à l'angle naturel de repos des produits pulvérulents et tel que lesdites surfaces latérales du tas ne viennent pas en contact avec les dispositifs à paliers.

2. Un dispositif selon la revendication 1, dans lequel chacun desdits dispositifs à paliers comprend une tige de section circulaire (18) fixée à ladite plaque (13).

3. Un dispositif selon la revendication 1 ou 2, dans lequel ladite plaque (13) est perforée.

4. Un dispositif selon une revendication précédente quelconque, dans lequel lesdits moyens de transport comprennent un convoyeur à vis (8).

5. Un dispositif selon une revendication précédente quelconque, dans lequel ladite plaque (13) est portée par une paire d'éléments allongés (14) reliés à l'extérieur des moyens définissant un espace à l'aide d'une poignée (15), afin de déplacer horizontalement ladite plaque (13).

6. Un dispositif selon la revendication 5, dans lequel ladite poignée (15) est détachable desdits éléments (14), lesdits moyens de transport (8) pouvant ensuite s'éloigner desdits moyens (2) définissant un espace.

7. Un dispositif selon la revendication 5 ou 6, dans lequel il existe un élément d'arrêt (17) reliant lesdits éléments allongés (14) et entre ladite poignée (15) et la plaque (13), afin de limiter le trajet de la plaque.

8. Un dispositif selon la revendication 6 ou 7, dans lequel ledit élément d'arrêt (17) et détachable pour permettre aux moyens de transport (8) de s'éloigner desdits moyens (2) définissant un espace.

9. Un dispositif selon la revendication 6 ou 8, dans lequel lesdits moyens (2) définissant un espace présentent une plaque (10) qui est amovible pour permettre aux moyens de transport (8) de s'éloigner des moyens définissant un espace.

10. Un dispositif selon la revendication 2, dans lequel lesdites tiges (18) de section circulaire se déplacent sur des surfaces planes correspondantes desdits moyens (2) définissant un espace.

11. Un dispositif selon une revendication précédente quelconque, dans lequel lesdits moyens définissant un espace comprennent des plaques et des cornières reliées ensemble.

12. Un dispositif selon la revendication 1, dans lequel lesdits moyens à paliers comprennent des paliers à billes (21).

13. Un dispositif selon les revendications 10 et 11, dans lequel lesdites surfaces planes sont créées par de telles cornières.

FIG.1

FIG.6(a)

FIG.6(b)

1

FIG.2

FIG.3

FIG.4(a)

FIG.4(b)

FIG.4(c)

FIG. 5(a)

FIG.5(b)

FIG. 5(c)

FIG.7(a)

FIG.7(b)

FIG. 8(a)

FIG.8(b)

7

FIG.8(c)

FIG.9(a)

FIG.9(b)

FIG.9(c)